# EUROPÄISCHE PATENTSCHRIFT

(11) **EP 0 662 273 B1**
(45) Veröffentlichungstag und Bekanntmachung des Hinweises auf die Patenterteilung: **13.10.1999**
(21) Anmeldenummer: 94924785.2
(22) Anmeldetag: 19.07.1994
(51) Int. Cl.: H04N 9/31

(54) **VIDEOPROJEKTIONSSYSTEM**
VIDEO PROJECTION SYSTEM
SYSTEME DE PROJECTION VIDEO

(30) Priorität: 23.07.1993 DE 4324848
(43) Veröffentlichungstag der Anmeldung: 12.07.1995
(73) Patentinhaber: LDT GmbH & Co. Laser-Display-Technologie KG, 07552 Gera (DE)
(72) Erfinder: DETER, Christhard, D-07546 Gera (DE); WUNDERLICH, Jörg, D-07552 Gera (DE)
(74) Vertreter: Geyer, Werner, Dr.-Ing.
(86) Internationale Anmeldenummer: EP9402376
(87) Internationale Veröffentlichungsnummer: WO9503675

(56) Entgegenhaltungen:
- EP-A- 0 311 843
- DE-A- 2 830 061
- US-A- 4 003 080
- PATENT ABSTRACTS OF JAPAN vol. 12, no. 106 (E-596) 6. April 1988 & JP,A,62 233 982 (MITSUBISHI)
- PATENT ABSTRACTS OF JAPAN vol. 9, no. 266 (E-352) 23. Oktober 1985 & JP,A,60 111 575 (FUJI)

## Beschreibung

Die Erfindung betrifft ein Videoprojektionssystem mit mindestens einer intensitätsmäßig steuerbaren Lichtquelle zur Erzeugung mindestens eines Lichtbündels und mit einer Ablenkeinrichtung, die das Lichtbündel sequentiell zur Erzeugung von Bildpunkten eines Videobildes auf einen Schirm bild- und zeilenmäßig ablenkt.

Ein derartiges Videoprojektionssystem ist aus der Zeitschrift "Funkschau", 1970, Heft 4, Seite 286, bekannt. Dabei handelt es sich um ein Videoprojektionssystem für Farbbilder, dessen verschiedene Farbsignale durch Laser erzeugt werden, wobei die von den Lasern ausgehenden Lichtbündel entsprechend dem Farbwert jedes Bildpunktes des Videobildes durch Lichtmodulatoren intensitätsmäßig verändert werden. Die von den Lichtmodulatoren ausgehenden Lichtbündel werden durch dichroitische Spiegel zu einem gemeinsamen Strahlenbündel zusammengefaßt, über ein mechanisch-optisches Ablenksystem bild- und zeilenmäßig abgelenkt und auf einen Schirm projiziert. Bei sehr großen Schirmgrößen müssen die Laser für entsprechend große Leistungen ausgelegt werden, was zu einem erheblichen Raumbedarf der einsetzbaren Laser führt. Neben der Größe der Laser stellt auch deren erforderliche Kühlung ein weiteres Problem dar, das einer kompakten Bauweise entgegensteht. Deshalb sind Videosysteme dieser Art aufwendig und benötigen einen großen Platzbedarf, so daß sie z.B. nicht innerhalb eines Wohnbereichs eingesetzt werden können.

In demselben "Funkschau"-Artikel ist noch ein weiteres Videoprojektionssystem beschrieben, das sogar noch größeren Raumbedarf aufweist, da die verschiedenen Farben über eine Prismenstrecke ausgefiltert werden müssen. Außerdem arbeitet dort die Vertikalablenkung mit einem vibrierenden Spiegel.

Dieses Videoprojektionssystem benötigt in der Ablenkeinrichtung also einen zusätzlichen Strahlaufteiler und zusätzliche Spiegel, was den Raumbedarf ebenso wie den konstruktiven Aufwand weiter erhöht.

Eine Anregung zur Verwirklichung einer kompakten Bauweise bei einem Videosystem findet sich in der DE 34 04 412 A1, die einen digitalen, flachen Farbfernseh-Großbildschirm beschreibt. Bei diesem werden die Bildpunkte eines Videobildes mit Hilfe von Lichtleitfasern auf einen Schirm überführt, wobei die Lichtleitfasern in Richtung auf den Schirm auseinander laufen. Durch eine Aufspreizung der Lichtleitfasern kann auf dem Schirm ein größeres Bild als das primäre Bild erzeugt werden. Weiter gibt die Verwendung von Lichtleitfasern die Möglichkeit, den Ort der Lichterzeugung räumlich unabhängig von der Lage des Bildschirms zu wählen, wodurch der Platzbedarf minimiert werden kann.

Nachteilig ist bei dieser Technik jedoch, daß für jeden Bildpunkt eine eigene Lichtleitfaser benötigt wird. So sind im dort dargestellten Beispiel zur Übertragung des Bildes 519.792 Lichtfasern erforderlich, die zudem noch geordnet miteinander verklebt werden müssen. Der Aufwand zur Herstellung eines solchen Systems ist daher außerordentlich groß'und die Auslastung pro Lichtleitfaser gering. Daneben besteht bei der Herstellung auch eine erhöhte Ausschußgefahr wegen der erforderlichen exakten Justierung der Lichtleitfasern zueinander.

Ausgehend hiervon liegt der Erfindung die Aufgabe zugrunde, das eingangs angegebene Videoprojektionssystem so auszugestalten, daß es vielseitiger einsetzbar ist, speziell eine besonders kompakte bzw. variable Bauweise gestattet und überdies auch kostengünstiger herstellbar ist.

EP-A-0311843 offenbart ein Videoprojektionssystem, in dem von drei Lichtqellen verschiedener Wellenlänge ausgehende Lichtbündel über eine jeweilige Lichtleitfaser einem Koppler zugeführt, dort vereinigt und gemeinsam mittels einer einzigen Lichtleitfaser übertragen werden. Das übertragene Licht wird über eine Kollimationslinse einer Ablenkeinheit zugeführt, um auf einen Schirm projiziert zu werden.

Die Aufgabe der Erfindung wird durch ein Videoprojektionssystem nach Anspruch 1 gelöst.

Das Videoprojektionssystem weist zwei Baugruppen auf, deren erste mindestens eine Lichtquelle enthält und mit einem Lichtausgang versehen ist, an dem sie das mindestens eine Lichtbündel verläßt, während die zweite Baugruppe die Ablenkeinrichtung enthält und mit einem Lichteingang ausgestattet ist, durch den ein Lichtbündel in die Ablenkeinrichtung abbildbar ist, und daß eine Lichtübertragungseinrichtung zur optischen Verbindung des Lichtausgangs der ersten Baugruppe mit dem Lichteingang der zweiten Baugruppe vorgesehen ist, die eine beliebige Anordnung der beiden Baugruppen relativ zueinander zuläßt.

Beim erfindungsgemäßen Videoprojektionssystem werden Lichterzeugung und Ablenkeinrichtung in voneinander getrennten, unterschiedlichen Baugruppen angeordnet, die nur optisch über die Lichtübertragungseinrichtung miteinander verbunden sind. Dabei können diese Baugruppen räumlich ganz unterschiedlich voneinander angeordnet sein, wodurch sich insgesamt der Raumbedarf minimieren läßt und auch eine wesentlich bessere Kühlung möglich wird, da beispielsweise die erste Baugruppe, die die Laser enthält, an einer gut kühlbaren Stelle angeordnet werden kann, ohne von der Lage der zweiten Baugruppe insoweit abhängig zu sein.

Aufgrund der Erfindung ist es sogar möglich, die erste Baugruppe separat von der zweiten Baugruppe in einem anderen Raum aufzustellen und die Übertragung des Laserlichts nur durch die Lichtübertragungseinrichtung von dem einen Raum zum anderen Raum vorzunehmen. Dies ergibt eine besonders vielseitige Anwendbarkeit des erfindungsgemäßen Videoprojektionssystems.

Das erfindungsgemäße Videoprojektionssystem weist weiter den Vorteil einfacher Wartung auf, da sowohl die Laser wie auch die Ablenkeinrichtung frei zugänglich gehalten werden können. Schließlich erweist sich das erfindungsgemäße Videoprojektionssystem auch als relativ unkompliziert im Vergleich zu den genannten bekannten Systemen.

Die Erfindung läßt sich sowohl für den Schwarz/Weiß-Bereich, wie auch für die Erzeugung farbiger Videobilder einsetzen.

In vorzugsweiser Weiterbildung der Erfindung enthält die Lichtübertragungseinrichtung ein Spiegelsystem. Spiegel sind Standardbauteile, mit denen auf einfache Weise eine auch kompliziertere optische Verbindung zwischen räumlich getrennten Baugruppen hergestellt werden kann. Bevorzugt sind dabei die Spiegel in ihren relativen Lagen zueinander verstellbar- bzw. einstellbar, wodurch eine rasche Anpassung der Lichtübertragungseinrichtung an den Lichtweg zwischen der ersten Baugruppe und der zweiten Baugruppe möglich ist.

Bei einer anderen bevorzugten Weiterbildung der Erfindung enthält die Lichtübertragungseinrichtung mindestens eine Lichtleitfaser. Mit dieser Lösung können auch komplizierteste optische Übertragungswege ohne Probleme einfach überbrückt werden, ohne daß eine Justierung an verschiedenen Ecken, an denen das Lichtbündel umgelenkt werden soll, erfolgen muß. Lichtleitfasern mit verschiedensten Übertragungscharakteristiken für die Wellenlängen des übertragenen Lichts sind heute preisgünstig erhältlich, so daß auch der Kostenaufwand bei einer derartigen Lösung begrenzt bleibt. Bevorzugt ist dabei mindestens eine Lichtleitfaser als Multimodefaser ausgebildet, mit der sich gleichzeitig Lichtbündel verschiedener Wellenlängen bzw. Farben übertragen lassen, so daß der Aufwand für die Lichtübertragungseinrichtung bei farbigen Videobildern besonders gering ist, da im Prinzip nur eine Lichtleitfaser benötigt wird, auch wenn bei besonderen Anforderungen mehr als eine Lichtleitfaser verwendet werden können.

Gemäß einer anderen vorzugsweisen Weiterbildung der Erfindung für ein Farbvideobild mit mindestens drei Lichtquellen mit verschiedenen Wellenlängen ist eine optische Anordnung vorgesehen, die die von den Lichtquellen ausgehenden Lichtbündel zu einem gemeinsamen Lichtbündel vereinigt, das so ausgerichtet wird, daß es eingangsseitig in die Lichtübertragungseinrichtung einfällt. Die Lichtquellen können Laser sein, es ist aber auch möglich, LED's zu verwenden, deren Ausgangsstrahl mit Hilfe einer Optik gebündelt wird.

Die Vereinigung der Lichtbündel zu einem gemeinsamen Lichtbündel durch eine optische Anordnung ist auf verschiedene Art und Weise möglich. Vorteilhafterweise kann hierfür beispielsweise ein Spiegelsystem verwendet werden. Es ist aber auch möglich, die von den Lichtquellen ausgehende Lichtbündel mit Hilfe von Lichtleitfasern in die Multimodefaser einzukoppeln, wofür Bauelemente der integrierten Optik verwendbar sind. Eine andere bevorzugte Möglichkeit besteht auch darin, Lichtleitfaserkoppler mit mehreren Eingangsfasern und einer Ausgangsfaser zu verwenden, bei denen die lichtleitenden Kerne der Eingangsfasern mit dem lichtleitenden Kern der Ausgangsfaser in optischer Verbindung stehen, wodurch eine Vereinigung der Lichtbündel zu einem gemeinsamen Lichtbündel erfolgen kann.

Selbst für Multimodefasern kann die Übertragungscharakteristik eine Wellenlängenabhängigkeit haben, was sich z.B. dadurch nachteilig auswirken kann, daß die Dämpfung der Intensität bei einer bestimmten Wellenlänge größer ist als bei anderen. Dies könnte beispielsweise durch unterschiedliche Erhöhung der Intensität bei der Ansteuerung der Lichtquellen ausgeglichen werden. Ein derartiger Ausgleich ist jedoch nur sehr begrenzt empfehlenswert, da die Kosten für einen Laser mit Erhöhung der Leistung überproportional ansteigen. Deswegen wird bevorzugt vorgesehen, daß eine Multimodefaser eingesetzt wird, die das Licht der Lichtquellen bei den verschiedenen Wellenlängen nahezu ungedämpft überträgt, bzw. daß die Dämpfungen bei den verschiedenen Wellenlängen nur unwesentlich voneinander abweichen, wobei die maximale Abweichung kleiner als 15% ist.

Eine vorzugsweise Weiterbildung der Erfindung besteht auch darin, daß die optische Anordnung zur Vereinigung der einzelnen Lichtbündel dichroitische Spiegel enthält, deren Spiegeleigenschaften und deren Durchlaßeigenschaften im wesentlichen von der Wellenlänge des Lichtes abhängt. Bei geeigneter Auswahl der Schichten der dichroitische Spiegeln kann praktisch 100% der Intensität der Lichtbündel reflektiert bzw. durchgelassen werden.

Eine andere vorzugsweise Weiterbildung der Erfindung für ein Farbvideobild sieht vor, daß bei mindestens drei Lichtquellen mit unterschiedlichen Wellenlängen für die Übertragung jedes Lichtbündels durch die Lichtübertragungseinrichtung für jede Wellenlänge jeweils eine Monomodefaser vorgesehen ist. Hierbei werden die Lichtbündel unterschiedlicher Wellenlängen am Ausgang der Lichtübertragungseinrichtung zu einem gemeinsamen Lichtbündel vereinigt, bevor dieses in die Ablenkeinrichtung abgebildet wird.

Nach einer weiteren vorzugsweisen Ausgestaltung des erfindungsgemäßen Videoprojektionssystems ist eingangsseitig der Lichtübertragungseinrichtung ein erstes optisches System angeordnet, welches das einfallende Licht in die Lichtleitfaser einkoppelt. Ein derartiges optisches System ist vor allem deswegen zweckmäßig, weil dadurch die gesamte Intensität eines Lichtbündels gezielt in die Lichtleitfaser eingekoppelt werden kann. Dies erlaubt es, die Lichtquellen, insbesondere die Laser, bei einer möglichst kleinen Leistung zu betreiben, da dann Verluste minimal gehalten werden können. Weiter wird bei einer Fokussierung des eingangsseitigen Lichtbündels auf den Kern einer Lichtleitfaser auch die Anforderung an die Fertigungstoleranzen oder die Justierung verringert, da selbst bei einem geringen Versatz des eingangsseitigen Lichtbündels dieses durch das optische System auf den Kern der Lichtleitfaser abgebildet werden kann.

Eine besonders günstige Einkopplung läßt sich vorteilhafterweise dann erreichen, wenn der bildseitige Brennpunkt des ersten optischen Systems in der Lichteintrittsfläche der Lichtleitfaser liegt. Damit wird das Lichtbündel nicht nur genau in den Kern der Lichtleitfaser eingekoppelt, sondern es ergibt sich auch der vorteilhaften Nebeneffekt, daß das Lichtbündel auf einen bestimmten Punkt, den Brennpunkt des optischen Systems, eingangsseitig mittig in die Lichtleitfaser eingeleitet werden kann, wodurch verschiedene Lichtstrahlen im Lichtbündel immer ungefähr gleichlange Wege durchlaufen und die Anzahl der Totalreflxionen im Lichtleiter für alle Strahlen ungefähr gleich wird, so daß die Kohärenzeigenschaften eines Lichtbündels beim Durchgang durch die Lichtleitfaser nur minimal verändert werden.

Eine weitere vorteilhafte Ausgestaltung der Erfindung besteht darin, daß ausgangsseitig der Lichtübertragungseinrichtung ein zweites optisches System angeordnet ist, welches das aus der Lichtleitfaser austretende Licht bündelt oder in die Ablenkeinrichtung fokussiert. Hierdurch lassen sich Verluste aufgrund einer Veränderung des Kohärenzverhaltens in der Lichtleitfaser teilweise kompensieren. Weiter wird von der Ablenkeinrichtung aufgrund des zweiten optischen Systems ein scharfer Punkt auf dem Schirm abgebildet, was die Bildqualität wesentlich verbessert. Vorzugsweise wird dabei eine dem zweiten optischen System zugeordnete Apertur so ausgelegt, daß der aus der Lichtaustrittsfläche einer Lichtleitfaser austretende Lichtstrahl von der Apertur vollständig erfaßt wird. Damit wird der gesamte Raumwinkelbereich des aus der Lichtleitfaser austretenden Lichtes erfaßt, so daß so gut wie kein Intensitätsverlust auftritt.

Gemäß einer weiteren vorzugsweisen Ausgestaltung der Erfindung ist ein dem zweiten optischen System zugeordneter objektseitiger Brennpunkt in der Lichtaustrittsfläche der Lichtleitfaser angeordnet, wodurch besondere gute Bündelungen bzw. Fokussierungen durch das zweite optische System erreichbar sind.

Das erste und/oder das zweite optische System kann z.B. eine einzelne Linse oder auch ein mehrstufiges Objektiv sein.

Vorteilhafterweise wird beim erfindungsgemäßen Videoprojektionssystem auch eine Optik zwischen Ablenkeinrichtung und Schirm vorgesehen, die ausgangsseitig den von der Ablenkeinrichtung eingangsseitig bei bild- und zeilenmäßiger Ablenkung eines Lichtbündels überstrichenen Raumwinkel vergrößert. Dadurch kann der Platzbedarf zwischen Ablenkeinrichtung und Schirm bei gleicher Bildgröße noch verringert und das erfindungsgemäße Videoprojektionssystem besonders flach gebaut werden, wodurch die Anwendung von Videoprojektionssystemen auch im normalen Wohnbereich möglich wird.

Die Erfindung wird nachfolgend anhand der Zeichnung beispielshalber noch näher erläutert. Es zeigen:
Fig. 1 ein Ausführungsbeispiel für ein erfindungsgemäßes Videoprojektionssystem, bei dem die Lichtübertragungseinrichtung eine Multimodefaser enthält;
Fig. 2 das Ausführungsbeispiel nach Fig. 1, jedoch mit drei Monomodefasern in der Lichtübertragungseinrichtung;
Fig. 3 ein Ausführungsbeispiel entsprechend Fig. 1, aber mit Spiegeln in der Lichtübertragungseinrichtung.

In den Figuren werden Videoprojektionssysteme für Farbvideobilder beschrieben, da derartige Systeme es gestatten, möglichst viele Eigenschaften der erfindungsgemäßen Videoprojektionssysteme darzustellen.

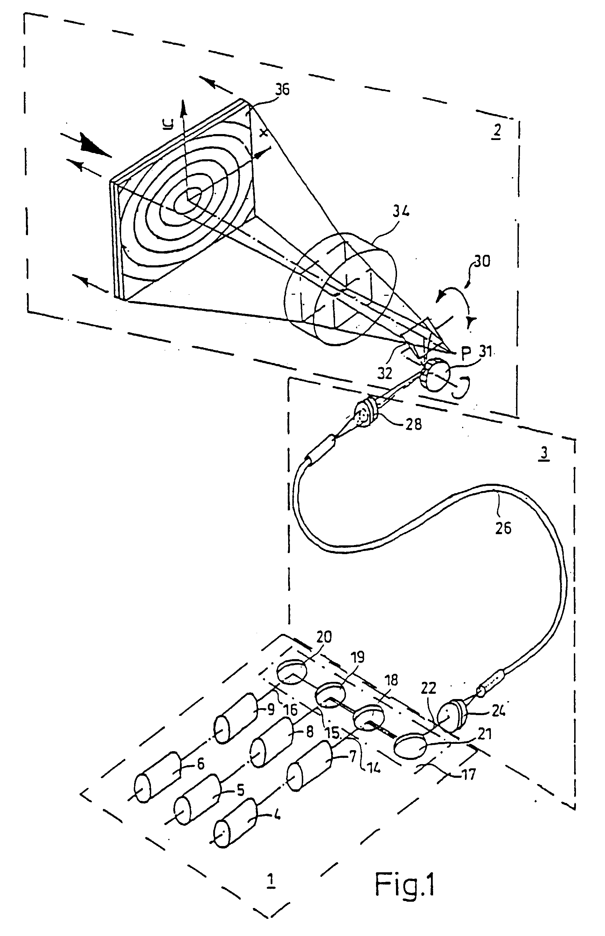

Fig. 1 zeigt ein Videoprojektionssystem, das in zwei Baugruppen 1 und 2 aufgeteilt ist, die nur schematisch angedeutet sind. Dabei dient die erste Baugruppe 1 zur Lichterzeugung und Modulation und die zweite Baugruppe 2 zur bild- und zeilenmäßigen Ablenkung für die Projektion eines Fernsehbildes auf einen Schirm 36. Zur Lichtübertragung ist in dem Ausführungsbeispiel von Fig. 1 eine Lichtübertragungseinrichtung 3 vorgesehen, die einen Lichtpfad zwischen der ersten Baugruppe 1 und der zweiten Baugruppe 2 ausbildet.

Die erste Baugruppe 1 dient zur Erzeugung der für die Videoprojektion benutzten intensitätsmäßig gesteuerten Lichtbündel. Im Ausführungsbeispiel von Fig. 1 sind für die drei Farben eines Farbvideobildes drei Lichtquellen 4, 5, 6 in Form von Laser-Lichtquellen vorgesehen. Die von diesen Lichtquellen 4, 5, 6 ausgehenden Lichtbündel werden durch Modulatoren 7, 8, 9 intensitätsmäßig zur Erzeugung einer gewünschten Farbvalenz des endgültigen Bildpunktes angesteuert. Dabei können die Modulatoren 7, 8, 9 als wesentliches Steuerelement zur Intensitätssteuerung DKDP-Kristalle enthalten. Aufgrund dieser Modulatoren können die Lichtquellen 4, 5, 6 mit Dauerleistung betrieben werden. Diese Technik ist besonders bei der Verwendung von Lasern vorteilhaft, da sie einerseits eine größere Stabilität der Laser garantiert und andererseits auch eine ausreichend schnelle Änderung der Lichtintensität für die Erzeugung eines Laservideobildes zuläßt. Bei anderen Ausführungen, beispielsweise wenn die Lichtquellen 4, 5, 6 von LED's gebildet werden, sind die Modulatoren 7, 8, 9 nicht mehr nötig, da LED's direkt angesteuert werden können und auch schnell genug für ein Videobild sind.

Von den Lichtquellen 4, 5, 6 mit dem Modulatoren 7, 8, 9 gehen Lichtbündel 14, 15, 16 aus, die durch eine optische Anordnung 17 in einem gemeinsamen Lichtbündel 22 vereinigt werden. Die optische Anordnung 17 benutzt dazu Spiegel 18, 19, 20, von denen die Spiegel 18, 19 als dichroitische Spiegel ausgeführt sind, die unterschiedliche Reflexionseigenschaften und Durchlaßeigenschaften bezüglich der Wellenlänge des Lichtes. Bei geeigneter Orientierung dieser dichroitischen Spiegel ist es möglich, den gesamten Strahl durchzulassen oder zu reflektieren, also nahezu 100% der gesamten Lichtintensität in einem gemeinsamen Strahlengang zusammenzuführen. In dem gemeinsamen Strahlengang ist ein weiterer Spiegel 21 angeordnet, der das gemeinsame Lichtbündel 22 reflektiert. Der Spiegel 21 dient aber nicht nur zur Auslenkung, sondern auch zur Ausrichtung des gemeinsamen Lichtbündels 22 in ein bezüglich des Lichtweges folgendes erstes optisches Systems 24. Dieses dient dazu, das Lichtbündel auf den Kern einer Lichtleitfaser 26 zu fokussieren, die als Multimodefaser ausgebildet und geeignet ist, alle von den Lichtquellen 4, 5, 6 ausgesandten Lichtbündel zu übertragen. Die Dämpfungswerte der Lichtleitfasern abhängig von den Wellenlängen sollten voneinander nicht mehr als 15% abweichen. Unterschiede in der Dämpfung könnten durch unterschiedliche Ansteuerung der Intensität für die Lichtbündel 14, 15, 16 ausgeglichen werden.

Multimodefasern haben üblicherweise einen Kern in der Größenordnung von 100 µm. Aufgrund dessen ist die Anzahl der Totalreflexionen unterschiedlich, je nach dem Ort, an dem ein Lichtstrahl aus dem Lichtbündel 22 auf den Kern der Lichtleitfaser auftrifft. Das hat zur Folge, daß die Kohärenzeigenschaft des einfallenden Lichtbündels bei sehr großen Übertragungslängen beim Weiterleiten in einer Multimodefaser 26 beeinflußt und das ansonsten radial gaußische Intensitätsprofil eines Lichtbündels stark verbreitert wird. Je besser die Fokussierung durch das erste optische System 24 auf einen Punkt konzentrisch zur Kernachse ist, desto geringer wird dieser Effekt. Deshalb ist es zweckmäßig, das erste optische System 24 für eine möglichst gute Fokussierung in die Mitte der Lichtleitfaser 26 auszulegen. Zu diesem Zweck wird vorgesehen, daß das Zentrum der Lichtleitfaser 26 eingangsseitig im bildseitigen Brennpunkt des ersten optischen Systems 24 liegt.

Nach Verlassen der Lichtleitfaser 26 tritt das Licht wieder in Form eines Kegels aus, wobei das austretende Lichtbündel mit einem zweiten optischen System 28 wieder gebündelt bzw. in einen Punkt abgebildet wird, der anschließend über ein Projektionssystem auf einen Schirm 36 geworfen wird. Die Projektion wird mittels der zweiten Baugruppe 2 vorgenommen. Zur bild- und zeilenmäßigen Ablenkung dient dabei eine Ablenkeinrichtung 30, die bei dem Beispiel von Fig. 1 als eine mechanische Ablenkeinrichtung mit einem Polygonspiegel 31 und einem Schwenkspiegel 32 ausgeführt ist.

Das abgelenkte Lichtbündel tritt anschließend in eine Optik 34 ein, die es auf den Schirm 36 wirft. Die Optik 34 dient bei dem Ausführungsbeispiel von Fig. 1 nicht nur zur Fokussierung des Lichtbündels auf den Schirm 36, sondern auch dazu, den von der Ablenkeinrichtung 30 überstrichenen Raumwinkel bezüglich der Abbildung des Lichtbündels auf den Schirm 36 zu vergrößern. Dadurch kann der Abstand des Schirms 36 von der Ablenkeinrichtung 30 sehr kurz gewählt werden. Die Optik 34 ermöglicht so zusätzlich zu der räumlichen Trennung in zwei Baugruppen eine flachere Bauweise.

Durch die bauliche Trennung der Baugruppen 1 und 2 und durch die Lichtübertragungseinrichtung 3 ist es möglich, beide Baugruppen 1 und 2 baulich zu entkoppeln, so daß die erste Baugruppe 1 in beliebiger Lage zu der zweiten Baugruppe 2 angeordnet werden kann. Falls man z.B. die erste Baugruppe 1 senkrecht anordnet, kann diese praktisch im Fuß eines Videoprojektionssystems Platz finden, so daß die flache Bauweise im wesentlichen nur noch durch den Abstand von Schirm 36 zur Ablenkeinrichtung 30 bestimmt wird. Dieser Abstand läßt sich durch die Optik 34 wesentlich verkürzen. Mit so einem Aufbau wurde es möglich, ein Videoprojektionssystem zu schaffen, das eine Bildschirmdiagonale von 2 m bei einer Tiefe von nur 60 cm aufweist.

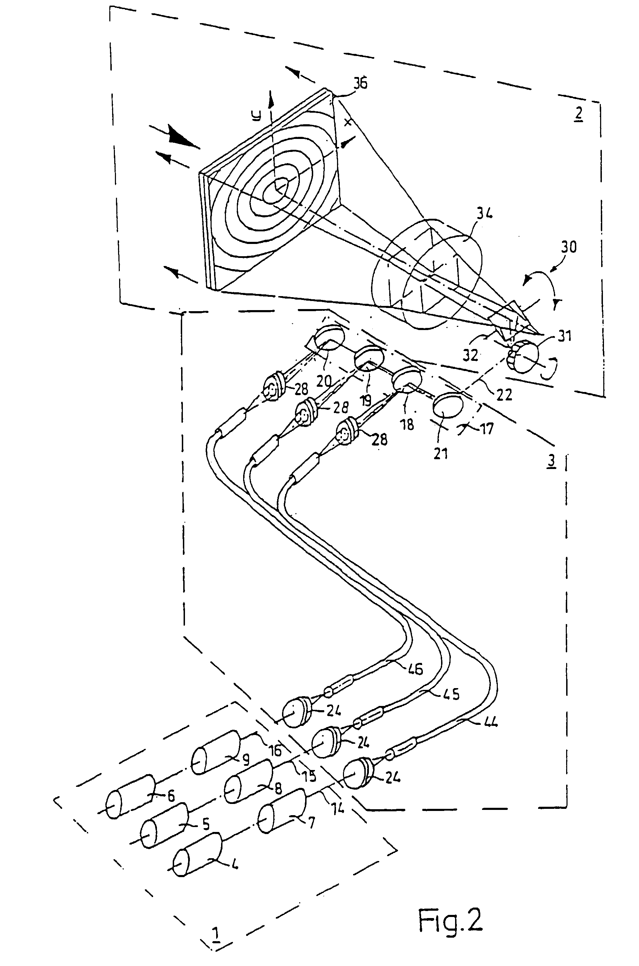

In Fig. 2 ist ein Ausführungsbeispiel gezeigt, bei dem die optische Anordnung 17, die die Lichtbündel 14, 15, 16 zu einem gemeinsamen Lichtbündel 22 vereinigt, nicht mehr innerhalb der ersten Baugruppe 1, sondern am Ausgang der Lichtübertragungseinrichtung 3 zu finden ist. Im Beispiel von Fig. 2 werden die Lichtstrahlen 14, 15, 16 jeweils durch ein eigenes optisches System 24 in jeweils eine eigene Lichtleitfaser 44, 45, 46 eingekoppelt. Die Lichtleitfasern 44, 45, 46 sind hier als Monomodefasern ausgeführt.

Das aus den Lichtleitfasern 44, 45, 46 austretende Licht wird wieder durch jeweils ein zweites optisches System 28 ausgekoppelt und durch eine optische Anordnung 17 zu einem gemeinsamen Lichtbündel 22 vereinigt, das in der zweiten Baugruppe 2 in gleicher Weise abgelenkt und projiziert wird, wie dies schon im Zusammenhang mit Fig. 1 beschrieben wurde.

Die Vereinigung der Lichtbündel 14, 15, 16 zu dem gemeinsamen Lichtbündel 22 durch die optische Anordnung 17 wird in den Ausführungsbeispielen der Fig. 1 und 2 mit Hilfe von Spiegeln 18, 19, 20 durchgeführt. Da in diesen Beispielen von Lichtleitfasern Gebrauch gemacht wird, können die Lichtbündel 14, 15, 16 aber auch einfach durch Bauelemente der integrierten Optik vereinigt werden, beispielsweise durch einen Lichtleitfaserkoppler mit mehreren Eingangsfasern und einer Ausgangsfaser, bei denen die lichtleitenden Kerne von Ausgangsfaser und Eingangsfaser in optischer Verbindung stehen. Dabei erfolgt die Vereinigung der Lichtbündel dadurch, daß sie aus den Eingangsfasern in die Ausgangsfaser übertreten. Bei Verwendung solcher Bauelemente können die Spiegel 18, 19, 20 und 21 eingespart werden, wobei im Beispiel von Fig. 2 dann auch nur ein einziges zweites optisches System 28 erforderlich wäre, um das Licht aus der Ausgangsfaser in die Ablenkeinrichtung 30 abzubilden.

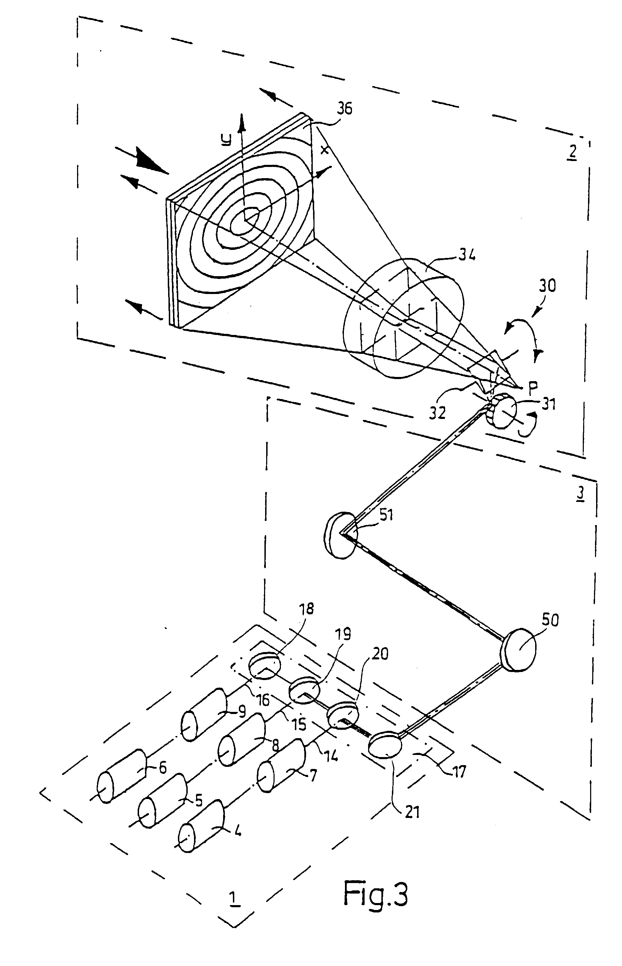

Das Ausführungsbeispiel nach Fig. 3 weist einen wesentlich einfacheren Aufbau als die Ausführungsbeispiele aus den Fig. 1 und 2 auf, da bei ihm auf zusätzliche erste und zweite Optiken 24 und 28 verzichtet werden kann. Die Umlenkung von der ersten Baugruppe 1 zur zweiten Baugruppe 2 erfolgt hier durch Spiegel, was nur rein schematisch in Fig. 3 durch zwei Spiegel 50, 51 angedeutet ist. Eine derartige Lichtübertragungseinrichtung ist wesentlich weniger aufwendig als die in Fig. 1 und Fig. 2 gezeigten, allerdings können mit ihr größere Abstände und komplizierte Lichtwege ohne Justiermöglichkeiten für die Spiegel 50 und 51 nur schwer überbrückt werden. Für sehr kompakte Systeme ist das Ausführungsbeispiel von Fig. 3 besonders gut geeignet.

Hingegen konnten mit den Anordnungen nach den Fig. 1 und Fig. 2 versuchsweise ohne Probleme Abstände bis zu 50 m überbrückt werden.

Ob die Lichtübertragungseinrichtung 3 aus Spiegeln oder Lichtleitfasern, oder als Kombination aus Spiegeln und Lichtleitfasern aufgebaut werden soll, hängt im wesentlichen vom Einsatzzweck, der Kompaktheit der Bauweise bzw. den örtlichen Verhältnissen und dem wirtschaftlich vertretbaren Aufwand ab.

## Patentansprüche

1. Videoprojektionssystem mit mindestens drei Intensitätsmäßig steuerbaren Lichtquellen (4; 5; 6) unterschiedlicher Wellenlängen zur Erzeugung jeweils mindestens eines Lichtbündels (14; 15; 16; 22) und mit einer optischen Anordnung (17), welche die von den Lichtquellen (4, 5, 6) ausgehenden Lichtbündel (14, 15, 16) zu einem gemeinsamen Lichtbündel (22) vereinigt sowie mit einer Ablenkeinrichtung (30), die das gemeinsame Lichtbündel (22) sequentiell zur Erzeugung von Bildpunkten eines Videobildes bild- und zeilenmäßig ablenkt, mit zwei Baugruppen (1, 2), bei denen die erste Baugruppe (1) die mindestens drei Lichtquellen (4, 5, 6) umfaßt und einen Lichtausgang aufweist, an dem das jeweilige Lichtbündel (14, 15, 16) oder das gemeinsame Lichtbündel (22) die Baugruppe verläßt, und bei denen die zweite Baugruppe (2) die Ablenkeinrichtung (30) sowie einen Lichteingang aufweist, durch den das gemeinsame Lichtbündel (22) in die Ablenkeinrichtung (30) abbildbar ist, und daß eine Lichtübertragungseinrichtung (3) vorgesehen ist, die eine optische Verbindung des Lichtausgangs der ersten Baugruppe (1) mit dem Lichteingang der zweiten Baugruppe (2) über mindestens eine Lichtleiffaser (26; 44, 45, 46) unabhängig von der relativen Lage der beiden Baugruppen (1, 2) zueinander ermöglicht, wobei die optische Anordnung (17) zum Vereinigen der von den Lichtquellen (4, 5, 6) ausgehenden Lichtbündel (14, 15, 16) zu einem gemeinsamen Lichtbündel (22) der Lichtleitfaser (26, 44, 45, 46) bezüglich der Lichtausbreitungsrichtung vor- oder nachgeordnet ist, dadurch gekennzeichnet, daß eingangsseitig der Lichtübertragungseinrichtung (3) ein erstes fokussierendes optisches System (24) angeordnet ist, welches das von der Lichtquelle (4; 5; 6) erzeugte Lichtbündel (14; 15; 16; 22) in die Lichtleitfaser (26; 44, 45, 46) einkoppelt, und daß ausgangsseitig der Lichtübertragungseinrichtung ein zweites fokussierendes optisches System (28) angeordnet ist, welches aus der Lichtleiffaser (26; 44; 45; 46) austretendes Licht dadurch bündelt, daß ein dem zweiten optischen System (28) zugeordneter objektseitiger Brennpunkt in der Lichtaustrittsfläche der Lichtleitfaser (26; 44, 45, 46) liegt und daß ein Schirm (36) vorgesehen ist, auf den das bild- und zeilenmäßig abgelenkte Lichtbündel gerichtet wird.

2. Videoprojektionssystem nach Anspruch 1, dadurch gekennzeichnet, daß eine dem zweiten optischen System (28) zugeordnete Apertur so ausgelegt ist, daß das aus der Lichtleitfaser (26; 44, 45, 46) austretende Lichtbündel (22; 14, 15, 16) von der Apertur vollständig erfaßt wird.

3. Videoprojektionssystem nach Anspruch 1 oder 2, dadurch gekennzeichnet, daß ein dem eingangsseitigen, ersten optischen System (24) zugeordneter bildseitiger Brennpunkt in der Lichteintrittsfläche der Lichtleitfaser (26; 44, 45, 46) liegt.

4. Videoprojektionssystem nach einem der Ansprüche 1 bis 3, dadurch gekennzeichnet, daß mindestens eine Lichtleitfaser eine Multimodefaser (26) ist.

5. Videoprojektionssystem nach Anspruch 5, dadurch gekennzeichnet, daß die Multimodefaser (26) die verschiedenen Wellenlängen ungedämpft überträgt oder die Dämpfungen bei den verschiedenen Wellenlängen nur unwesentlich voneinander abweichen, wobei die maximale Abweichung kleiner als 15% ist.

6. Videoprojektionssystem nach Anspruch 1 bis 3, dadurch gekennzeichnet, daß die Lichtübertragungseinrichtung (3) für die Übertragung der von den Lichtquellen (4, 5, 6) erzeugten Lichtbündel (14, 15, 16) für jede Wellenlänge jeweils eine Monomodefaser (44, 45, 46) enthält.

7. Videoprojektionssystem nach einem der Ansprüche 1 bis 6, dadurch gekennzeichnet, daß die optische Anordnung (17) zum Vereinigen der Lichtbündel (14, 15, 16) dichroitische Spiegel (19, 20) enthält.

8. Videoprojektionssystem nach einem der Ansprüche 1 bis 7, dadurch gekennzeichnet, daß eine Optik (34) zwischen Ablenkeinrichtung (30) und Schirm (36) vorgesehen ist, die den von der Ablenkeinrichtung (30) eingangsseitig bei bild- und zeilenmäßiger Ablenkung des Lichtbündels (22) überstrichenen Raumwinkel ausgangsseitig vergrößert.

## Claims

1. Video projection system with at least three light sources (4; 5; 6), controllable in intensity, with different wavelengths for producing in each case at least one beam of light (14; 15; 16; 22) and with an optical arrangement (17) which combines the beams of light (14, 15, 16) originating from the light sources (4, 5, 6) to a common beam of light (22), and with a deflector (30) which deflects the entire beam of light (22) image-wise and line-wise sequentially to produce pixels of a video image, with two modules (1, 2), of which the first module (1) includes the at least three light sources (4, 5, 6) and comprises a light output at which the respective beam of light (14, 15, 16) or the common beam of light (22) leave the module and of which the second module (2) comprises the deflector (30) and a light input through which the common beam of light (22) can be displayed in the deflector (30) and in that a light transmitter (3) is provided which permits an optical connection between the light output of the first module (1) and the light input of the second module (2) via at least one optical fibre (26; 44, 45, 46) independently of the relative position of the two modules (1, 2) to one another, wherein the optical arrangement (17) for combining the beams of light (14, 15, 16) originating from the light sources (4, 5, 6) to a common beam of light (22) precedes or follows the optical fibre (26, 44, 45, 46) with respect to the light propagation direction, characterised in that on the input side of the light transmitter (3) there is arranged a first focusing optical system (24) which couples the beam of light (14; 15; 16; 22) produced by the light source (4; 5; 6) into the optical fibre (26; 44, 45, 46), and in that on the output side of the light transmitter there is arranged a second focusing optical system (28) which concentrates light issuing from the optical fibre (26; 44; 45; 46) such that an object-side focus associated with the second optical system (28) is located in the light outlet face of the optical fibre (26; 44, 45, 46) and in that a screen (36) is provided toward which the beam of light deflected image-wise and line-wise is directed.

2. Video projection system according to claim 1, characterised in that an aperture associated with the second optical system (28) is so designed that the beam of light (22; 14, 15, 16) issuing from the optical fibre (26; 44, 45, 46) is completely detected by the aperture.

3. Video projection system according to claim 1 or 2, characterised in that an image-side focus associated with the input-side first optical system (24) is located in the light inlet face of the optical fibre (26; 44, 45, 46).

4. Video projection system according to one of claims 1 to 3, characterised in that at least one optical fibre is a multimode fibre (26).

5. Video projection system according to claim 5, characterised in that the multimode fibre (26) transmits the various wavelengths in an unattenuated manner or the attenuations at the various wavelengths only deviate insignificantly from one another, the maximum deviation being smaller than 15%.

6. Video projection system according to claims 1 to 3, characterised in that the light transmitter (3) for transmitting the beams of light (14, 15, 16) produced by the light sources (4, 5, 6) contains in each case a monomode fibre (44, 45, 46) for each wavelength.

7. Video projection system according to one of claims 1 to 6, characterised in that the optical arrangement (17) contains dichroic mirrors (19, 20) for combining the beams of light (14, 15, 16).

8. Video projection system according to one of claims 1 to 7, characterised in that a lens (34) is provided between deflector (30) and screen (36) which enlarges the solid angle scanned by the deflector (30) on the input side during image-wise and line-wise deflection of the beam of light (22) on the output side.

## Revendications

1. Système de projection vidéo comportant au moins trois sources lumineuses (4 ; 5 ; 6) d'intensité commandable et de longueurs d'onde différentes pour produire chacune au moins un faisceau lumineux (14 ; 15 ; 16 ; 22) ainsi qu'un dispositif optique (17) qui réunit en un faisceau lumineux (22) commun les faisceaux lumineux (14, 15, 16) partant des sources lumineuses (4, 5, 6), et comportant un dispositif de déviation (30) qui dévie le faisceau lumineux (22) commun, de manière, séquentielle en ce qui concerne l'image et les lignes, pour produire des points d'une image vidéo, et comportant deux ensembles (1, 2) dont le premier ensemble (1) contient les sources lumineuses (4, 5, 6), qui sont au moins trois, et présente une sortie de lumière par laquelle chaque faisceau lumineux (14, 15, 16) ou le faisceau lumineux commun (22) sort de l'ensemble, et dont le deuxième ensemble (2) comporte le dispositif de déviation (30) ainsi qu'une entrée de lumière par laquelle le faisceau lumineux commun (22) peut être reproduit dans le dispositif de déviation (30), et dans lequel il est prévu un dispositif de transmission de lumière (3) qui permet une liaison optique entre la sortie de lumière du premier ensemble (1) et l'entrée de lumière du deuxième ensemble (2) par au moins une fibre optique (26 ; 44 ; 45, 46), indépendamment de la position relative des deux ensembles (1, 2) l'un par rapport à l'autre, le dispositif optique (17) étant disposé devant ou derrière la fibre optique (26 ; 44, 45, 46), en considérant le sens de propagation de la lumière, pour réunir les faisceaux lumineux (14, 15, 16) partant des sources lumineuses (4, 5, 6) en un faisceau lumineux commun (22), caractérisé en ce que côté entrée du dispositif de transmission de lumière (3) il est disposé un premier système optique (24) de focalisation qui envoie le faisceau lumineux (14 ; 15 ; 16 ; 22), produit par la source lumineuse (4 ; 5 ; 6), dans la fibre optique (26 ; 44, 45, 46), et en ce que côté sortie du dispositif de transmission de lumière il est prévu un deuxième système optique (28) de focalisation qui concentre la lumière sortant de la fibre optique (26 ; 44 ; 45 ; 46), de manière qu'un foyer objet, associé au deuxième système optique (28), se trouve dans la surface de sortie de lumière de la fibre optique (26 ; 44, 45, 46), et en ce qu'il est prévu un écran (36) vers lequel est orienté le faisceau lumineux dévié en ce qui concerne l'image et les lignes.

2. Système de projection vidéo selon la revendication 1, caractérisé en ce qu'une ouverture associée au deuxième système optique (28) est telle que le faisceau lumineux (22 ; 14, 15, 16) sortant de la fibre optique (26 ; 44, 45, 46), est totalement capté par l'ouverture.

3. Système de projection vidéo selon la revendication 1 ou 2, caractérisé en ce qu'un foyer image, associé au premier système optique (24) côté entrée, se trouve dans la surface d'entrée de lumière de la fibre optique (26 ; 44, 45, 46).

4. Système de projection vidéo selon l'une des revendications 1 à 3, caractérisé en ce qu'au moins une fibre optique est une fibre multimode (26).

5. Système de projection vidéo selon la revendication 5, caractérisé en ce que la fibre multimode (26) transmet de manière non amortie les différentes longueurs d'onde ou les amortissements des différentes longueur d'onde ne s'écartent qu'insensiblement les uns des autres, l'écart maximal étant inférieur à 15%.

6. Système de projection vidéo selon les revendications 1 à 3, caractérisé en ce que le dispositif de transmission de lumière (3) contient une fibre monomode (44, 45, 46) pour chaque longueur d'onde, pour la transmission des faisceaux lumineux (14, 15, 16) produits par les sources lumineuses (4, 5, 6).

7. Système de projection vidéo selon l'une quelconque des revendications 1 à 6, caractérisé en ce que le dispositif optique (17) contient des miroirs dichroïques (19, 20) pour réunir les faisceaux lumineux (14, 15, 16).

8. Système de projection vidéo selon l'une quelconque des revendications 1 à 7, caractérisé en ce qu'une optique (34) est prévue entre le dispositif de déviation (30) et l'écran (36), laquelle agrandit côté sortie l'angle spatial balayé côté entrée par le dispositif de déviation (30) lors de la déviation du faisceau lumineux (22), en ce qui concerne l'image et les lignes.
